# DEMANDE DE BREVET EUROPEEN

(11) **EP 4 650 221 A1**
(43) Date de publication de la demande: **19.11.2025**
(21) Numéro de dépôt: 25170514.1
(22) Date de dépôt: 14.04.2025
(51) Int. Cl.: B60Q 1/00, B60R 19/52, F21S 43/20, F21W 104/00, B60R 13/00

(54) **DISPOSITIF D'ÉCLAIRAGE À GLACE DE PROTECTION MONOBLOC**

(30) Priorité: 14.05.2024 FR 2404899
(71) Demandeur: Stellantis Auto SAS, 78300 Poissy (FR)
(72) Inventeur: PERON, RODOLPHE, 95220 HERBLAY (FR); BOUDAN, JULIEN, 91210 DRAVEIL (FR)
(74) Mandataire: ESIP

(57) **Abrégé**

Un dispositif d'éclairage (DE) comprend :
- deux premières sources (SP11, SP12) propres à générer des photons respectivement pour deux écrans de diffusion latéraux (EDL1, EDL2) de type plat et longilignes, et
- une glace de protection principale (GPP) monobloc et définissant deux boîtiers latéraux (BL1, BL2) logeant respectivement les écrans de diffusion latéraux (EDL1, EDL2), et un boîtier central (BC) prolongé sur deux côtés opposés par les boîtiers latéraux (BL1, BL2) et logeant un module d'éclairage central (MEC) comportant une seconde source propre à générer des photons pour un écran de diffusion central de type plat et devant lequel est placée une glace de protection centrale (GPC).

## Description

### Domaine technique de l'invention

L'invention concerne les dispositifs d'éclairage comportant au moins deux écrans de diffusion plats et longilignes.

### Etat de la technique

Dans certains domaines techniques, comme par exemple dans certains véhicules, éventuellement de type automobile, on utilise des premiers dispositifs d'éclairage qui comprennent deux sources propres à générer des photons respectivement pour deux écrans de diffusion latéraux (généralement droit et gauche) de type plat, longilignes et chargés de diffuser sur une face avant les photons générés.

Par exemple, dans un véhicule automobile un tel premier dispositif d'éclairage peut équiper des parties droite et gauche d'une calandre installée dans l'extrémité avant afin de rendre cette calandre lumineuse.

Parfois, on peut associer au premier dispositif d'éclairage décrit ci-avant un second dispositif d'éclairage, dit central du fait qu'il est installé entre les deux écrans de diffusion latéraux, et chargé de rétroéclairer une ou plusieurs formes qui peuvent, par exemple, représenter un logo de marque. On dispose alors d'une zone centrale éclairée et entourée (à droite et à gauche) par deux zones latérales éclairées.

Un premier inconvénient d'un tel agencement réside dans le fait qu'il nécessite la conception des premier et second dispositifs d'éclairage de façon séparée, mais avec possiblement des éléments de couplage permettant de les coupler entre eux. Ce qui est chronophage et onéreux.

Un deuxième inconvénient d'un tel agencement réside dans le fait que la fabrication des premier et second dispositifs d'éclairage nécessite la conception et l'utilisation d'outillages spécifiques indépendants, ce qui est aussi chronophage et onéreux.

Un troisième inconvénient d'un tel agencement réside dans le fait que les deux sous-parties droite et gauche du premier dispositif d'éclairage et le second dispositif d'éclairage doivent généralement être installés séparément, ce qui est aussi chronophage et onéreux.

L'invention a donc notamment pour but d'améliorer la situation.

### Présentation de l'invention

Elle propose notamment à cet effet un dispositif d'éclairage comprenant :
- deux écrans de diffusion latéraux (EDLj) de type plat et longilignes,
- un module d'éclairage central (MEC) comportant un écran de diffusion central (EDC) de type plat, une glace de protection centrale (GPC) placée devant cet écran, une seconde source (SP2) propre à générer des photons pour cet écran,
- deux premières sources propres à générer des photons respectivement pour les deux écrans de diffusion.

Ce dispositif d'éclairage se caractérise par le fait qu'il comprend aussi une glace de protection principale monobloc et définissant :
- deux boîtiers latéraux logeant respectivement les écrans de diffusion latéraux, et destinés à laisser passer les photons de leur écran de diffusion,
- un boîtier central prolongé sur deux côtés opposés par les boîtiers latéraux et logeant au moins partiellement le module d'éclairage central.

Grâce à l'invention, une unique pièce permet de loger au moins partiellement les deux écrans de diffusion latéraux et le module d'éclairage central, ce qui permet de simplifier la conception du dispositif d'éclairage et des outillages spécifiques indépendants associés, de simplifier l'assemblage des différents constituants du dispositif d'éclairage et l'installation de ce dernier dans un système, et donc de réduire les coûts de conception et de fabrication du dispositif d'éclairage et du système que ce dernier équipe.

Le dispositif d'éclairage selon l'invention peut comporter d'autres caractéristiques qui peuvent être prises séparément ou en combinaison, et notamment :
- la glace de protection principale peut comprendre, à chaque interface entre son boîtier central et l'un de ses boîtiers latéraux, des premiers éléments de positionnement. Dans ce cas, le module d'éclairage central peut comprendre des seconds éléments de positionnement coopérant avec ces premiers éléments de positionnement pour positionner une face avant centrale de la glace de protection centrale dans une position choisie par rapport à des faces avant latérales des boîtiers latéraux ;
- en présence de la première option, les premiers et seconds éléments de positionnement peuvent coopérer ensemble pour positionner la face avant centrale à un même niveau que les faces avant latérales ;
- également en présence de la première option, les seconds éléments de positionnement peuvent être agencés sous la forme de pattes s'étendant suivant une direction sensiblement perpendiculaire à la face avant centrale et de façon opposée à cette dernière, et les premiers éléments de positionnement peuvent définir des gorges logeant étroitement, partiellement et respectivement ces pattes ;
- également en présence de la première option, le module d'éclairage central peut comprendre un boîtier auxiliaire comportant les seconds éléments de positionnement, et logeant la seconde source et l'écran de diffusion central ;
- en présence de l'une des deux dernières sous-options, le boîtier auxiliaire peut être solidarisé fixement au boîtier central ;
- les premières sources peuvent être solidarisées à une face arrière du boîtier central, opposée à la face avant centrale ;
- la glace de protection principale peut être réalisée par moulage par bi-injection de première et seconde matières plastiques, la première matière plastique étant transparente aux photons diffusés par les écrans de diffusion latéraux, et la seconde matière plastique entourant partiellement cette première matière plastique et étant opaque aux photons générés par les premières et seconde sources ;
- chaque boîtier latéral peut avoir une longueur et des hauteur et épaisseur strictement inférieures à cette longueur et perpendiculaires entre elles et à cette dernière.

L'invention propose également un véhicule, éventuellement de type automobile, et comprenant un dispositif d'éclairage du type de celui présenté ci-avant.

Par exemple, ce véhicule peut comprendre une extrémité avant comportant une calandre à laquelle est solidarisé fixement le dispositif d'éclairage.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig. 1] illustre schématiquement, dans une vue en perspective du côté avant, un exemple d'extrémité avant d'un véhicule comprenant une calandre équipée d'un exemple de réalisation d'un dispositif d'éclairage selon l'invention,
[Fig. 2] illustre schématiquement, dans une vue en perspective du côté avant, le dispositif d'éclairage de la figure 1, avant qu'il n'équipe une calandre de véhicule,
[Fig. 3] illustre schématiquement, dans une vue en perspective du côté avant, la glace de protection principale du dispositif d'éclairage de la figure 2,
[Fig. 4] illustre schématiquement, dans une vue en perspective du côté avant, le module d'éclairage central du dispositif d'éclairage des figures 1 et 2, avant qu'il ne soit solidarisé au boîtier central de la glace de protection principale,
[Fig. 5] illustre schématiquement, dans une vue en perspective du côté avant et en coupe dans un plan horizontal, une partie centrale du dispositif d'éclairage de la figure 2, et
[Fig. 6] illustre schématiquement, dans une vue en perspective du côté avant, le boîtier central de la glace de protection principale du dispositif d'éclairage de la figure 2, avant qu'il ne reçoive le module d'éclairage central du dispositif d'éclairage des figures 2 et 4.

### Description détaillée de l'invention

L'invention a notamment pour but de proposer un dispositif d'éclairage DE comportant une glace de protection principale GPP monobloc et hébergeant deux écrans de diffusion latéraux EDLj (j = 1 ou 2) et une partie au moins d'un module d'éclairage central MEC.

Dans ce qui suit, on considère, à titre d'exemple non limitatif, que le dispositif d'éclairage DE est destiné à équiper un véhicule de type automobile, comme par exemple une voiture. Mais le dispositif d'éclairage DE peut équiper n'importe quel véhicule (terrestre, maritime (ou fluvial), ou aérien), n'importe quel appareil électrique, n'importe quelle installation (y compris industrielle), et n'importe quel bâtiment (public ou privé) devant (ou pouvant) comporter un dispositif d'éclairage comprenant deux écrans de diffusion latéraux et un module d'éclairage central.

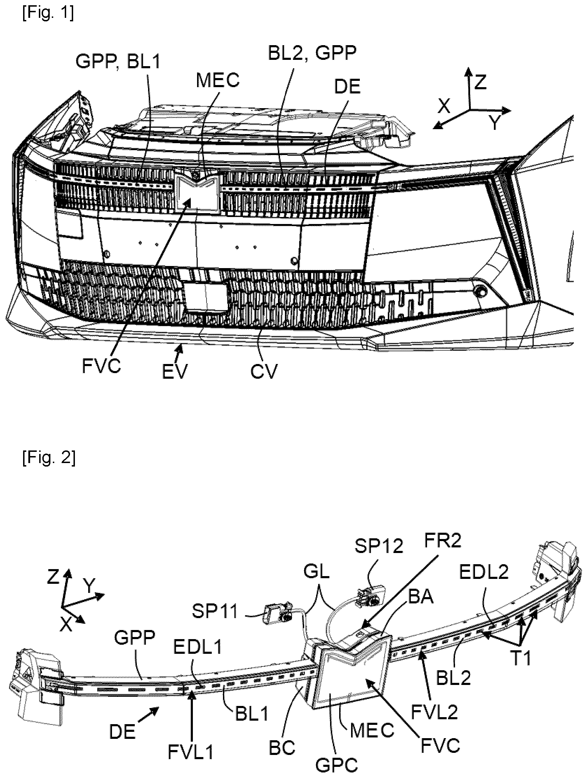

Par ailleurs, on considère dans ce qui suit, à titre d'exemple non limitatif et comme illustré non limitativement sur la figure 1, que le dispositif d'éclairage DE est destiné à équiper une calandre CV installée dans l'extrémité avant EV d'un véhicule automobile. Mais le dispositif d'éclairage DE pourrait être destiné à équiper l'extrémité arrière d'un véhicule automobile, par exemple.

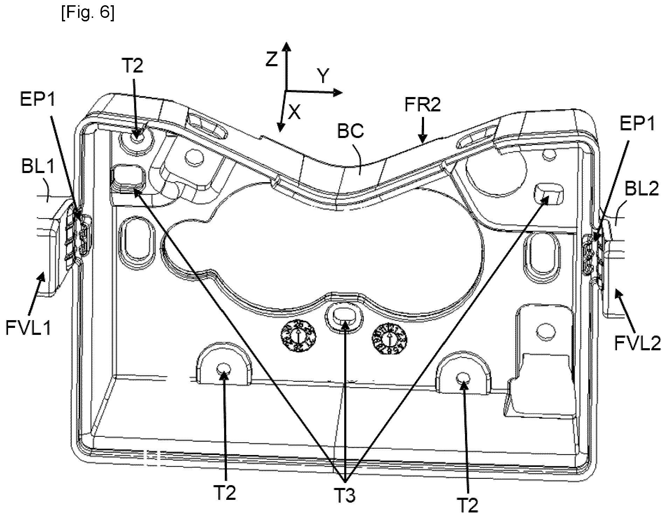

Sur les figures 1 à 6 la direction X est destinée à être parallèle à la direction longitudinale du véhicule, laquelle est sensiblement parallèle aux côtés latéraux (ou longitudinaux) comportant les portières latérales, la direction Y est destinée à être parallèle à la direction transversale du véhicule, laquelle est perpendiculaire à la direction longitudinale X, et la direction Z est destinée à être parallèle à la direction verticale du véhicule, laquelle est perpendiculaire aux directions longitudinale X et transversale Y.

Par ailleurs, dans ce qui précède et ce qui suit la notion « d'avant » est définie par rapport à l'extrémité avant du véhicule, et la notion « d'arrière » est définie par rapport à l'extrémité arrière du véhicule (opposée à l'extrémité avant). Par conséquent, la partie avant d'un élément est (destinée à être) orientée vers l'extrémité avant du véhicule, tandis que la partie arrière de cet élément est (destinée à être) orientée vers l'extrémité arrière du véhicule.

On a schématiquement illustré sur la figure 1 un exemple d'extrémité avant EV d'un véhicule comprenant une calandre CV à laquelle est solidarisé fixement, par exemple par clippage et/ou vissage, un exemple de réalisation d'un dispositif d'éclairage DE selon l'invention.

Comme illustré au moins partiellement sur les figures 2, 4 et 5, un dispositif d'éclairage DE, selon l'invention, comprend deux premières sources SP11 (j = 1, droite) et SP12 (j = 2, gauche), deux écrans de diffusion latéraux EDL1 (j = 1, droit) et EDL2 (j = 2, gauche), une glace de protection principale GPP, et un module d'éclairage central MEC.

Chaque première source SP1j est agencée de manière à générer des photons pour l'un des deux écrans de diffusion latéraux EDLj associés. Par exemple, chaque première source de photons SP1j peut comprendre au moins une diode électroluminescente (ou led (« Light Emitting Diode »)). Mais en variante elle pourrait comprendre au moins une diode laser ou un laser à gaz, par exemple.

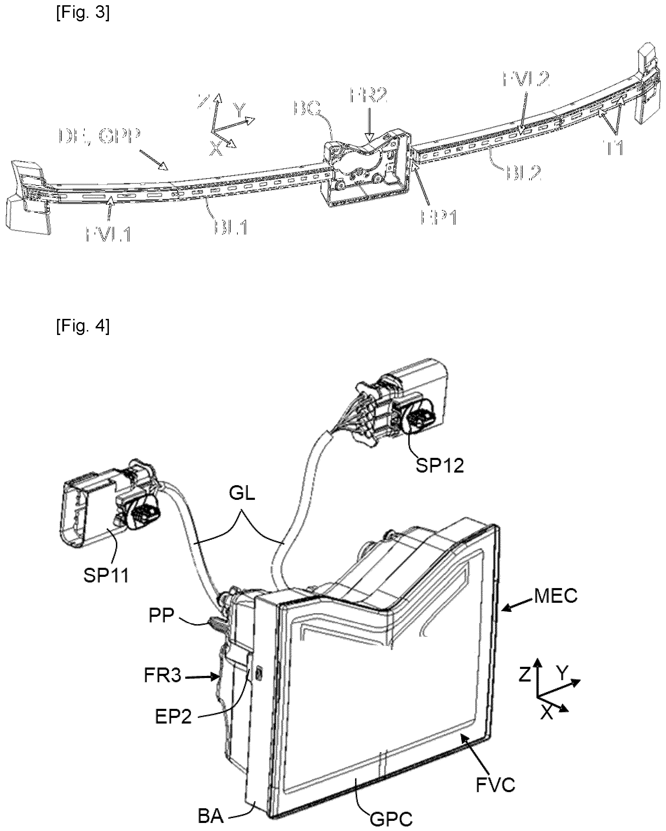

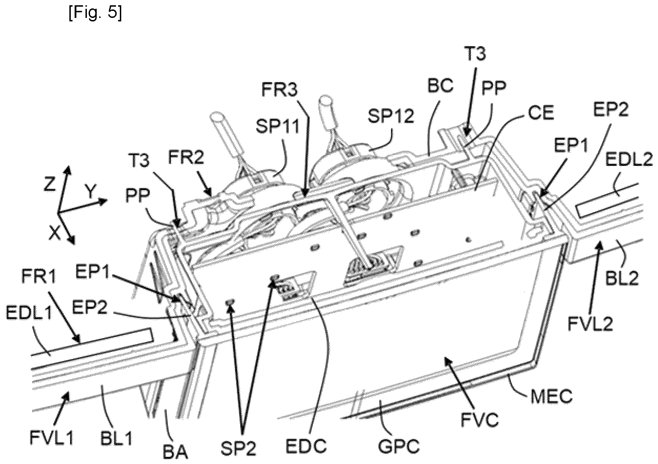

On notera que dans l'exemple illustré non limitativement sur les figures 2 et 4 les photons générés par une première source de photons SP1j sont guidés jusqu'à l'écran de diffusion latéral EDLj associé par un guide de lumière GL associé du dispositif d'éclairage DE. Dans ce cas, chaque guide de lumière GL est installé dans la glace de protection principale GPP et comprend une partie installée en regard d'une première face arrière FR1 de l'écran de diffusion latéral EDLj associé (voir figure 5) et comportant une face avant délivrant les photons guidés pour cette première face arrière FR1. Mais un dispositif d'éclairage DE peut ne pas comprendre de guide de lumière GL.

Comme cela apparaît partiellement sur la figure 5, chaque écran de diffusion latéral EDLj est de type plat et longiligne. Il présente donc une longueur (ici suivant la direction transversale Y), une hauteur (ici suivant la direction verticale Z) et une épaisseur (ici suivant la direction longitudinale X) qui sont perpendiculaires entre elles. Les hauteur et épaisseur sont strictement inférieures à la longueur.

Par exemple, la longueur peut être comprise entre 50 cm et 70 cm, la hauteur peut être comprise entre 8 mm et 15 mm, et l'épaisseur peut être comprise entre 2 mm et 6 mm.

Comme illustré sur la figure 3, la glace de protection principale GPP est monobloc et définit deux boîtiers latéraux BLj (ici droit (j = 1) et gauche (j = 2)) et un boîtier central BC. Par exemple, cette glace de protection principale GPP peut être réalisée par moulage en polycarbonate (ou PC), au moins en partie transparent aux photons (par exemple de couleur cristal).

Comme illustré partiellement sur les figures 2 et 5, chaque boîtier latéral BLj loge l'un des deux écrans de diffusion latéraux EDLj.

Lorsque les écrans de diffusion latéraux EDLj sont de type plat et longilignes, chaque boîtier latéral BLj peut avoir une longueur (ici suivant la direction transversale Y), et des hauteur (ici suivant la direction verticale Z) et épaisseur (ici suivant la direction longitudinale X) strictement inférieures à cette longueur et perpendiculaires entre elles et à cette dernière.

De plus, chaque boîtier latéral BLj participant à la protection d'un écran de diffusion latéral EDLj, tout en laissant passer les photons qu'il diffuse, il comprend donc une paroi avant pleine et comportant une face avant latérale FVLj (orientée vers l'extérieur). On notera que dans l'exemple illustré non limitativement, pour donner un effet d'éclairage discontinu, cette paroi avant de chaque boîtier latéral BLj comprend des premiers trous traversants T1 par lesquels sortent de façon privilégiée les photons issus de la première source SP1j associée.

Comme illustré partiellement sur les figures 2, 3, 5 et 6, le boîtier central BC est prolongé sur deux côtés opposés (ici suivant la direction transversale Y) respectivement par les deux boîtiers latéraux BLj. De plus, ce boîtier central BC loge au moins partiellement le module d'éclairage central MEC. Il est donc ouvert du côté de sa face avant (orientée vers l'extérieur).

Comme illustré partiellement sur les figures 2, 4 et 5, le module d'éclairage central MEC comprend au moins une seconde source SP2, un écran de diffusion central EDC et une glace de protection centrale GPC. Le boîtier central BC n'est pas destiné à transmettre les photons émis par la seconde source.

La seconde source SP2 est agencée de manière à générer des photons pour l'écran de diffusion central EDC. Par exemple, la seconde source de photons SP2 peut comprendre au moins une diode électroluminescente (ou led). Mais en variante elle pourrait comprendre au moins une diode laser ou un laser à gaz, par exemple.

Par exemple, et comme illustré non limitativement sur la figure 5, le module d'éclairage central MEC peut aussi comprendre une carte électronique CE comportant la seconde source SP2 et des composants et/ou circuit(s) électronique(s) permettant de contrôler l'alimentation et le fonctionnement de cette source SP2. Egalement par exemple, cette carte électronique CE peut être une carte à circuits imprimés de type PCB (« Printed Circuit Board »).

Comme illustré partiellement sur la figure 5, l'écran de diffusion central EDC est de type plat et la glace de protection centrale GPC est placée devant lui. Les photons générés par la seconde source SP2 parviennent donc sur une face arrière de l'écran de diffusion central EDC, et ce dernier (EDC) les diffuse sur sa face avant en direction de la glace de protection centrale GPC qui comprend une face avant centrale FVC par laquelle sortent les photons diffusés.

Grâce au caractère monobloc de la glace de protection principale GPP, une unique pièce (GPP) permet de loger au moins partiellement les deux écrans de diffusion latéraux EDLj et le module d'éclairage central MEC. Cela offre plusieurs avantages. En effet, cela permet de simplifier la conception du dispositif d'éclairage DE, ce qui permet de réduire les coûts de conception de ce dernier (DE). Ensuite, cela permet de réduire le nombre d'outillages spécifiques indépendants devant être conçus et utilisés pour fabriquer le dispositif d'éclairage DE, ce qui permet aussi de réduire les coûts de conception et de fabrication de ce dernier (DE). De plus, cela permet de simplifier l'assemblage des différents constituants du dispositif d'éclairage DE et l'installation de ce dernier (DE), ici sur la calandre CV d'un véhicule (pour la rendre lumineuse), ce qui permet aussi de réduire les coûts de de fabrication de ce dernier (DE) et du véhicule.

Par exemple, et comme illustré non limitativement et au moins partiellement sur les figures 3, 5 et 6, la glace de protection principale GPP peut comprendre des premiers éléments de positionnement EP1 à chaque interface entre son boîtier central BC et l'un de ses boîtiers latéraux BLj. Dans ce cas, et comme illustré non limitativement et au moins partiellement sur les figures 4 et 5, le module d'éclairage central MEC peut comprendre des seconds éléments de positionnement EP2 qui coopèrent avec les premiers éléments de positionnement EP1 pour positionner la face avant centrale FVC de la glace de protection centrale GPC dans une position qui est choisie par rapport aux faces avant latérales FVLj des boîtiers latéraux BLj.

Egalement par exemple, et comme illustré non limitativement et au moins partiellement sur les figures 2 et 5, les premiers EP1 et seconds EP2 éléments de positionnement peuvent coopérer ensemble pour positionner la face avant centrale FVC à un même niveau (ici suivant la direction longitudinale X) que le niveau où sont placées les faces avant latérales FVLj. Cela permet de donner l'impression d'un affleurement entre les face avant centrale FVC et faces avant latérales FVLj. Mais dans une variante de réalisation non illustrée, il pourrait y avoir un décalage (ici suivant la direction longitudinale X) entre le niveau où est placée la face avant centrale FVC et le niveau où sont placées les faces avant latérales FVLj.

Egalement par exemple, et comme illustré non limitativement et au moins partiellement sur les figures 4 à 6, les seconds éléments de positionnement EP2 peuvent être agencés sous la forme de pattes qui s'étendent suivant une direction sensiblement perpendiculaire à la face avant centrale FVC (et donc ici parallèle à la direction longitudinale X), et de façon opposée à cette face avant centrale FVC (et donc vers l'arrière). Dans ce cas, les premiers éléments de positionnement EP1 peuvent définir des gorges qui logent étroitement, partiellement et respectivement les pattes EP2.

On notera que la face avant centrale FVC peut comprendre au moins une zone comportant au moins une forme prédéfinie. Par exemple, chaque forme prédéfinie peut participer à (ou être) la représentation d'un logo de marque, éventuellement de véhicule.

Egalement par exemple, et comme illustré non limitativement et au moins partiellement sur les figures 2, 4 et 5, le module d'éclairage central MEC peut aussi comprendre un boîtier auxiliaire BA comportant les seconds éléments de positionnement EP2, logeant la seconde source SP2 (et son éventuelle carte électronique CE) et l'écran de diffusion central EDC, et auquel est solidarisée fixement la glace de protection centrale GPC. On dispose ainsi d'un module d'éclairage central MEC compact, facilement manipulable, assurant une parfaite protection de ses constituants internes, et facile à coupler au boîtier central BC. Mais dans une variante de réalisation non illustrée, le module d'éclairage central MEC pourrait ne pas comprendre de boîtier auxiliaire BA, et dans ce cas, ses constituants doivent être installés dans le boîtier central BC.

On notera que le boîtier auxiliaire BA est préférentiellement solidarisé fixement au boîtier central BC. Mais, de préférence, les premiers EP1 et seconds EP2 éléments de positionnement sont destinés à définir (très) précisément la position de la face avant centrale FVC par rapport aux faces avant latérales FVLj, et non pas à assurer le couplage du boîtier auxiliaire BA au boîtier central BC.

Cette solidarisation fixe peut, par exemple, se faire par vissage au moyen de vis (non illustrées) destinées à traverser des deuxièmes trous traversants T2 définis dans la paroi arrière du boîtier central BC (qui comprend la deuxième face arrière FR2 de ce dernier (BC)), et à se visser dans des trous filetés correspondants définis dans la face arrière du boîtier auxiliaire BA. Mais dans une variante de réalisation non illustrée, cette solidarisation fixe pourrait se faire par clippage, par exemple.

On notera également qu'afin de positionner précisément le boîtier auxiliaire BA par rapport au boîtier central BC, le boîtier auxiliaire BA peut comporter des pions de positionnement PP s'étendant vers l'arrière (ici suivant la direction longitudinale X) depuis sa troisième face arrière FR3, et destinés à être partiellement logés dans des troisièmes trous traversants T3 correspondants définis dans la paroi arrière du boîtier central BC (comprenant la deuxième face arrière FR2), comme illustré non limitativement et au moins partiellement sur les figures 4 et 5.

On notera également que le boîtier auxiliaire BA peut, par exemple, être réalisé par moulage d'un polycarbonate, de préférence opaque aux photons générés par la seconde source SP2 (par exemple de couleur noire).

On notera également que l'écran de diffusion central EDC peut, par exemple, être réalisé par moulage d'un polycarbonate (ou PC) transparent aux photons qu'elle diffuse (par exemple de couleur cristal). De préférence, on utilisera un PC « TARFLON » (marque déposée) qui favorise la diffusion des photons.

On notera également que la glace de protection centrale GPC peut, par exemple, être réalisée par moulage d'un polycarbonate transparent aux photons diffusés par l'écran de diffusion central EDC (par exemple de couleur cristal).

On notera également que la glace de protection principale GPP peut, par exemple, être réalisée par moulage par bi-injection de première et seconde matières plastiques. Dans ce cas, la première matière plastique est transparente aux photons qui sont diffusés par les écrans de diffusion latéraux EDLj, et la seconde matière plastique entoure partiellement la première matière plastique et est opaque aux photons qui sont générés par les premières SP1j et seconde SP2 sources.

On comprendra que les parois avant des boîtiers latéraux BLj qui comprennent les faces avant latérales FVLj ne sont définies que par la première matière plastique, tandis qu'une partie au moins des parois latérales et les parois arrière des boîtiers latéraux BLj sont préférentiellement définies par les première et seconde matières plastiques. Par exemple, la première matière plastique peut être un polycarbonate (ou PC) transparent aux photons (par exemple de couleur cristal), et la seconde matière plastique peut être un polycarbonate (ou PC) opaque aux photons (par exemple de couleur noire). De préférence, la première matière plastique est un PC « TARFLON » (marque déposée) qui favorise la diffusion des photons.

Egalement par exemple, et comme illustré non limitativement et au moins partiellement sur la figure 5, les premières sources SP1j peuvent être solidarisées à la deuxième face arrière FR2 du boîtier central BC, qui est opposée à la face avant centrale FVC. Cette solidarisation peut se faire par clippage et/ou vissage, par exemple.

## Revendications

1. Dispositif d'éclairage (DE) comprenant :
- deux écrans de diffusion latéraux (EDLj) de type plat et longilignes,
- un module d'éclairage central (MEC) comportant un écran de diffusion central (EDC) de type plat, une glace de protection centrale (GPC) placée devant cet écran, une seconde source (SP2) propre à générer des photons pour cet écran,
- deux premières sources (SP1j) propres à générer des photons respectivement pour les deux écrans de diffusion, **caractérisé en ce qu'**il comprend en outre une glace de protection principale (GPP) monobloc et définissant ;
- deux boîtiers latéraux (BLj) logeant respectivement lesdits écrans de diffusion latéraux (EDLj), et destinés à laisser passer les photons de leur écran de diffusion,
- un boîtier central (BC) prolongé sur deux côtés opposés par lesdits boîtiers latéraux (BLj) et logeant au moins partiellement le module d'éclairage central (MEC).

2. Dispositif d'éclairage selon la revendication 1, **caractérisé en ce que** ladite glace de protection principale (GPP) comprend, à chaque interface entre ledit boîtier central (BC) et l'un desdits boîtiers latéraux (BLj), des premiers éléments de positionnement (EP1), et ledit module d'éclairage central (MEC) comprend des seconds éléments de positionnement (EP2) coopérant avec lesdits premiers éléments de positionnement (EP1) pour positionner une face avant centrale (FVC) de ladite glace de protection centrale (GPC) dans une position choisie par rapport à des faces avant latérales (FVLj) desdits boîtiers latéraux (BLj).

3. Dispositif d'éclairage selon la revendication 2, **caractérisé en ce que** lesdits premiers (EP1) et seconds (EP2) éléments de positionnement coopèrent ensemble pour positionner ladite face avant centrale (FVC) à un même niveau que lesdites faces avant latérales (FVLj).

4. Dispositif d'éclairage selon la revendication 2 ou 3, **caractérisé en ce que** lesdits seconds éléments de positionnement (EP2) sont agencés sous la forme de pattes s'étendant suivant une direction sensiblement perpendiculaire à ladite face avant centrale (FVC) et de façon opposée à cette dernière (FVC), et lesdits premiers éléments de positionnement (EP1) définissent des gorges logeant étroitement, partiellement et respectivement lesdites pattes (EP2).

5. Dispositif d'éclairage selon l'une des revendications 2 à 4, **caractérisé en ce que** ledit module d'éclairage central (MEC) comprend un boîtier auxiliaire (BA) comportant lesdits seconds éléments de positionnement (EP2), et logeant ladite seconde source (SP2) et ledit écran de diffusion central (EDC).

6. Dispositif d'éclairage selon la revendication 5, **caractérisé en ce que** ledit boîtier auxiliaire (BA) est solidarisé fixement audit boîtier central (BC).

7. Dispositif d'éclairage selon l'une des revendications 1 à 6, **caractérisé en ce que** lesdites premières sources (SP1j) sont solidarisées à une face arrière (FR2) dudit boîtier central (BC), opposée à ladite face avant centrale (FVC).

8. Dispositif d'éclairage selon l'une des revendications 1 à 7, **caractérisé en ce que** ladite glace de protection principale (GPP) est réalisée par moulage par bi-injection de première et seconde matières plastiques, ladite première matière plastique étant transparente auxdits photons diffusés par lesdits écrans de diffusion latéraux (EDLj), et ladite seconde matière plastique entourant partiellement ladite première matière plastique et étant opaque auxdits photons générés par lesdites premières (SP1j) et seconde (SP2) sources.

9. Véhicule, **caractérisé en ce qu'**il comprend un dispositif d'éclairage (DE) selon l'une des revendications 1 à 8.

10. Véhicule selon la revendication 9, **caractérisé en ce qu'**il comprend une extrémité avant (EV) comportant une calandre (CV) à laquelle est solidarisé fixement ledit dispositif d'éclairage (DE).
